(19) Europäisches Patentamt
European Patent Office
Office européen des brevets

(11) EP 1 984 678 B1

(12) # EUROPÄISCHE PATENTSCHRIFT

(45) Veröffentlichungstag und Bekanntmachung des Hinweises auf die Patenterteilung:
**03.05.2017 Patentblatt 2017/18**

(21) Anmeldenummer: **07701864.6**

(22) Anmeldetag: **07.02.2007**

(51) Int Cl.:
***D06N 3/12*** (2006.01)
***B32B 5/26*** (2006.01)
***D06M 15/53*** (2006.01)
***D06M 15/61*** (2006.01)
***F24F 6/02*** (2006.01)
***B32B 5/02*** (2006.01)
***C08G 73/02*** (2006.01)
***C08J 7/04*** (2006.01)
***B32B 5/08*** (2006.01)

(86) Internationale Anmeldenummer:
**PCT/CH2007/000064**

(87) Internationale Veröffentlichungsnummer:
**WO 2007/090313 (16.08.2007 Gazette 2007/33)**

(54) **LUFTBEFEUCHTER UND DARIN ENTHALTENE VERDUNSTUNGSMATTE**

AIR HUMIDIFIER AND EVAPORATION MAT CONTAINED THEREIN

HUMIDIFICATEUR D’AIR ET NAPPE FIBREUSE D’EVAPORATION POUR CE DERNIER.

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.02.2006 CH 216062006**

(43) Veröffentlichungstag der Anmeldung:
**29.10.2008 Patentblatt 2008/44**

(73) Patentinhaber: **Walter Meier (Klima International) AG**
**8808 Pfäffikon SZ (CH)**

(72) Erfinder:
- **GEIGER, Stephan**
  **CH-5745 Safenwil (CH)**
- **LEU, Karl**
  **CH-5712 Beinwil am See (CH)**
- **DUBUIS, Robert**
  **CH-2563 Ipsach (CH)**

(74) Vertreter: **Bohest AG**
**Holbeinstrasse 36-38**
**4051 Basel (CH)**

(56) Entgegenhaltungen:
**DE-A1- 2 911 698**
**US-A- 5 340 651**
**US-A- 5 622 776**

EP 1 984 678 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Luftbefeuchter und die darin enthaltenen Verdunstungsmatten.

Zur Erhöhung der Luftfeuchtigkeit in geschlossenen Räumen, insbesondere während des Winters, wo die Innenluft durch das Heizen deutlich zu trocken ist, werden Luftbefeuchter eingesetzt. In einem Luftbefeuchter wird die zu befeuchtende trockene Innenluft an einer benetzten Oberfläche vorbeigeführt, wodurch von der Oberfläche Wasser verdunstet und so die Luft teilweise mit Wasserdampf sättigt. Um diesen Verdunstungsprozess zu unterstützen enthalten Luftbefeuchter in der Regel mindestens eine sogenannte Verdunstungsmatte mit einer möglichst hohen spezifischen benetzten Oberfläche, an der die zu befeuchtende Luft vorbeigeführt wird. Die Verdunstungsmatten bestehen üblicherweise aus Cellulosefasern, Glasfasern, Kunststofffasern oder auch aus Metalldrähten, etwa aus Aluminium. Oft werden auch mehrere geeignet strukturierte, insbesondere gewellte, Verdunstungsmatten nebeneinandergelegt, so dass zwischen jeweils zwei nebeneinanderliegenden Lagen der Verdunstungsmatten Kanäle ausgebildet werden, die einen verbesserten Durchtritt des zu befeuchtenden Luftstroms ermöglichen.

In der WO-A-99/32845 wird erwähnt, dass solche Matten mit einem "wetting agent" imprägniert sein können, oder dass solche Matten mit einem "hygroscopic surface layer" versehen werden können. Es werden jedoch keinerlei Beispiele für das "wetting agent" oder das "hygroscopic surface layer" genannt. US-A-5340651 offenbart eine Vorrichtung zum Verdunsten von Flüssigkeit, wobei die Vorrichtung eine Verdunstungsmatte aufweist, die ein textiles Flächengebilde mit Fasern umfasst. Die Oberfläche der Fasern ist mit einem hydrophilen Überzug beschichtet. Die Beschichtung besteht aus einer Mischung eines Acryl Polymers und eines Harnstoff-Formaldehyd Polymers und wird auch als Bindemittel verwendet. Andererseits werden in der Bekleidungsindustrie seit mehreren Jahrzehnten ausgehärtete Reaktionsprodukte aus einem Polyamin und aus einem Diglycidylether eines Polyalkylenglykols als antistatische Beschichtungen von Textilien eingesetzt. Es wird beispielhaft auf die US-A-3,347,803 verwiesen.

Aufgabe der vorliegenden Erfindung ist die Bereitstellung einer verbesserten Vorrichtung zur Luftbefeuchtung.

Die Aufgabe wird erfindungsgemäss gelöst durch eine Vorrichtung zum Verdunsten von Flüssigkeit, wobei die Vorrichtung eine Verdunstungsmatte aufweist, die mit der Flüssigkeit benetzt ist und an der die Verdunstung der Flüssigkeit geschieht, dadurch gekennzeichnet, dass die Verdunstungsmatte ein textiles Flächengebilde mit Fasern umfasst, wobei die Oberfläche der Fasern mit einem Überzug beschichtet ist, der ein ausgehärtetes Reaktionsprodukt aus einem Polyamin und aus einem mit Endgruppen der Struktur $X\text{-}CH_2[CH(OR)]_wCH_2\text{-}$ veretherten Polyalkylenglycol umfasst, in welcher Struktur w eine ganze Zahl von 0 bis 1 ist und, wenn w 0 ist, X ein Halogen bedeutet, und wenn w 1 ist, X Halogen und R Wasserstoff bedeuten oder X und OR zusammen -O- bedeuten.

Bevorzugte Varianten ergeben sich aus den Unteransprüchen.

Es wurde überraschenderweise gefunden, dass diese ausgehärteten Reaktionsprodukte sich als hygroskopische und daher die Verdunstung von Flüssigkeiten, insbesondere von Wasser, fördernde Beschichtungen von Verdunstungsmatten eignen. Es wurde des Weiteren gefunden, dass diese Beschichtungen so stark an dem textilen Flächengebilde haften, dass sie gegen allmähliches Auswaschen stabil sind. Dies ist bei Luftbefeuchtern wichtig, da hier die Verdunstungsmatte intermittent oder kontinuierlich mit Wasser benetzt wird und die Gefahr des Auswaschens der Beschichtung besteht, wenn sie nur ungenügend haftet. Die Widerstandsfähigkeit gegen Auswaschen wurde auch dann beobachtet, wenn die so beschichteten Verdunstungsmatten mit erwärmtem Wasser, d.h. mit Wasser von etwa 40°C bis etwa 80°C, befeuchtet wurden. Es wird vermutet, dass diese Stabilität auf die mit der Aushärtung des Reaktionsproduktes einhergehende Quervernetzung zurückzuführen ist.

Die erfindungsgemässen Vorrichtungen enthalten zunächst eine oder mehrere der eingangs definierten Verdunstungsmatten. Diese werden bevorzugt in einen Rahmen, etwa aus Edelstahl oder aus Aluminium, eingeklemmt, um möglichst die ganze geometrische Mattenfläche der Umgebung, die die zu verdunstende Flüssigkeit aufnehmen soll, zu exponieren. Die Umgebung, die die zu verdunstende Flüssigkeit aufnehmen soll, ist in der Regel gasgefüllt; insbesondere ist diese Umgebung luftgefüllt.

Des Weiteren können die erfindungsgemässen Vorrichtungen bevorzugt Zuführungen zur intermittenten oder kontinuierlichen Zufuhr von zu verdunstender Flüssigkeit an die Verdunstungsmatte(n) aufweisen. Ein erstes Beispiel für solche Zuführungen sind Düsen, die die aufgespannte Verdunstungsmatte mit der Flüssigkeit besprühen können. Ein weiteres Beispiel für eine solche Zuführung ist ein vorzugsweise waagrecht an der Oberkante der Verdunstungsmatte angeordnetes Rohr mit einer Vielzahl von Öffnungen, das die Flüssigkeit von oben auf die Verdunstungsmatte rieseln lässt, von wo aus sie mittels der Schwerkraft an der Matte herunterläuft.

Um die Verdunstung der Flüssigkeit zu fördern, können die erfindungsgemässen Vorrichtungen bevorzugt auch eine Umwälzvorrichtung für Gase enthalten, die die gasförmige Umgebung der Verdunstungsmatte umwälzt und so für einen fortlaufenden Austausch des Gasraums an der Oberfläche der Verdunstungsmatte(n) sorgt. Beispiele hierfür sind Gebläse und Propeller.

Die zu verdunstende Flüssigkeit kann jede Flüssigkeit sein, die bei der Betriebstemperatur der Vorrichtung, mithin in der Regel in etwa die Umgebungstemperatur der Vorrichtung, einen merklichen Dampfdruck aufweist, die aber bei dieser Temperatur noch nicht siedet. Bevorzugte Beispiele für solche Flüssigkeiten sind alle Arten von Lösungen

von nichtflüchtigen Stoffen in Wasser oder in organischen Lösungsmittel oder in gemischt wässerig/organischen Lösungsmitteln, oder auch reines Wasser.

Die erfindungsgemässen Vorrichtungen weisen eine faserhaltige Verdunstungsmatte auf. Als "Fasern" werden im Rahmen der vorliegenden Anmeldung alle Arten von länglichen Partikeln verstanden, deren Länge viel grösser ist als die Abmessungen der grösstmöglichen senkrecht zur Längsrichtung gemessenen, vorzugsweise konstanten Querschnittsfläche. Beispiele für Fasern sind alle eigentlichen Fasern von typisch nahezu konstant kreisförmiger Querschnitt (diese sind bevorzugt), oder auch Streifen, die aus Folien geschnitten wurden und die daher eine dünne, rechteckige konstante Querschnittsfläche aufweisen.

Die Fasern bilden das Gerüst des textilen Flächengebildes. Das Material, aus dem sie bestehen, ist nicht kritisch. Es kann sich einerseits um Naturfasern handeln (z.B. Baumwolle, Flachs, Hanf, Jute, Nessel, Ramie, Seide, Sisal oder Wolle); es können anorganische Fasern sein (etwa Fasern aus Glas, Keramik, Aluminiumoxid, Kohlenstoff, Metall, Quarz oder Mineralwolle); es können auch synthetische Fasern sein (etwa aus Polyester, Viskose, PPS wie etwa Ryton®, Polyacrylnitril, Aramid wie etwa Nomex®, Kevlar® oder Kynol®, PVC oder Polyamid wie etwa Nylon). Bevorzugt sind Fasern aus einem synthetischen thermoplastischen Kunststoff. Beispiele für den synthetischen thermoplastischen Kunststoff sind etwa:

i) Polyester, insbesondere Polyethylenterephthalat oder Polybutylenterephthalat;
ii) Polyolefine, insbesondere Polyethylen, Polypropylen und Ethylen/$\alpha$-Olefin-Copolymere, wobei als $\alpha$-Olefin ($C_3$-$C_8$)-$\alpha$-Olefine bevorzugt sind, und Propylen besonders bevorzugt ist;
iii) Polyamide, insbesondere Nylon-6 oder Nylon-66; und
iv) Thermoplastische Polyurethane.

Erfindungsgemäss bevorzugt sind Polyethylenterephthalat und Polypropylen.

Die Struktur des textilen Flächengebildes ist nicht kritisch. Das textile Flächengebilde kann gewirkt, gewebt, gestrickt oder ein Vlies sein. Als "Vlies" wird im Rahmen der vorliegenden Anmeldung ein nichtgewirktes, nichtgestricktes, nichtgeflochtenes und nichtgewebtes textiles Flächengebilde verstanden. Bevorzugt ist das textile Flächengebilde ein aerodynamisch, hydrodynamisch, elektrostatisch oder mittels Extrusion gebildetes Vlies (letzteres wird als Spinnvlies bezeichnet); eher bevorzugt ist es ein aerodynamisch hergestelltes Vlies.

Bevorzugt weist das textile Flächengebilde eine gewisse Porosität auf. Diese Porosität lässt sich als Quotient $A_{Struktur}/A_{geometrisch}$ von Strukturoberfläche pro Flächeneinheit der geometrischen Fläche des textilen Flächengebildes definieren. Dieser Quotient $A_{Struktur}/A_{geometrisch}$ lässt sich, wie folgt berechnen:

$$A_{Struktur}/A_{geometrisch} = 1000 \times G \times \pi \sum \frac{x_i \times d_i}{T_i}$$

in welcher Formel G das Flächengewicht des textilen Flächengebildes ist (in Gramm pro Quadratmeter seiner geometrische Fläche), die Summe über alle i Arten der in dem textilen Flächengebilde vorhandenen Fasern geht, $x_i$ der Massenanteil der i-ten Faser bezogen auf die Gesamtmasse aller im textilen Flächengebilde enthaltenen Fasern ist, $T_i$ der Titer der i-ten Faser ist (in g pro 1000 m Faserlänge) und $d_i$ der Durchmesser der i-ten Faser (in Metern) ist. Der Wert des besagten Quotienten $A_{Struktur}/A_{geometrisch}$ liegt (vor Weitervearbeitung bestimmt) bevorzugt im Bereich von 10 bis 50, eher bevorzugt beträgt er etwa 20.

Die durchschnittliche Länge der gerüstbildenden Fasern, wenn das textile Flächengebilde ein Vlies ist, liegt bevorzugt im Bereich von etwa 30 bis 90 mm, eher bevorzugt bei etwa 40 bis etwa 60 mm und besonders bevorzugt beträgt sie etwa 50 mm. Der Durchmesser der Fasern liegt bevorzugt im Bereich von 10 bis 100 $\mu$m, eher bevorzugt im Bereich von 15 bis 30 $\mu$m, besonders bevorzugt ist er etwa 20 $\mu$m. Der Titerbereich der gerüstbildenden Fasern beträgt bevorzugt etwa 1 bis etwa 17 dtex, eher bevorzugt etwa 3 bis etwa 10 dtex und besonders bevorzugt etwa 5 dtex (1 dtex bedeutet 10 km Faser wiegen 1 g).

Das bevorzugte textile Flächengebilde in Form eines Vlieses ist eher bevorzugt ein verfestigtes Vlies. Hierzu kann das Vlies mittels geeigneter Bindemittel oder, erfindungsgemäss bevorzugt, eines thermoplastischen Schmelzklebers und mittels Thermofusion an den Kreuzungsstellen der gerüstbildenden Fasern verklebt sein. Als Bindemittel eignen sich thermoplastische Bindemittel, etwa auf der Basis von wässerigen Dispersionen von Polyacrylaten und/oder Copolymeren mit Polystyrol, Ethylen-Vinylacetat-Copolymer, Polyvinylacetat oder Vinylchlorid-Ethylen-Methylmethacrylat-Copolymer; duroplastische Bindemittel, etwa auf der Basis wässeriger Dispersionen von Acrylatpolymeren oder von Acrylat/Olefin-Copolymeren, die beim Erhitzen unter Einwirkung eines Härters (etwa einer methylolgruppenhaltigen Verbindung, beispielsweise Trimethlylolpropan oder N-Methylolcarbonsäureamide; Triethanolamin, aliphatische Diamine oder aliphatische Diisocyanate) unter Quervernetzung aushärten. Der thermoplastische Schmelzkleber kann etwa ein Copolymer sein. Bevorzugt ist es ein Copolyester. Beispiele für solche Copolyester sind einerseits Blockcopolyester

von Weichsegmenten aus Polyalkylenetherdiolen und/oder langkettigen (z.B. $C_5$-$C_{12}$) aliphatischen Dicarbonsäureestern mit teilkristallinen Polybutylenterephthalat-Segmenten und andererseits Copolyester aus aliphatischen ($C_2$-$C_{10}$)-Diolen (bevorzugt aus ($C_2$-$C_4$)-Diolen, z.B. Ethylenglykol, 1,3-Propandiol, 1,2-Propandiol, 1,4-Butandiol, 1,3-Butandiol, 1,2-Butandiol oder den Mischungen davon) und aus Phthalsäure/Isophthalsäure, wobei das Molverhältnis Phthalsäure zu Isophthalsäure bevorzugt im Bereich von 7 : 3 bis 9 : 1 liegen kann.

Der bevorzugt zur Herstellung eines verfestigten Vlieses verwendbare thermoplastische Schmelzkleber weist einen Schmelzpunkt oder ein Schmelzintervall auf, der oder das tiefer ist als der Schmelzpunkt oder das Schmelzintervall des Materials der in Vlies enthaltenen strukturgebenden Fasern. Wenn das Material der gerüstbildenden Fasern ein thermoplastischer Kunststoff ist, kann sein Schmelzpunkt oder sein Schmelzintervall typisch im Bereich von etwa 130 °C bis etwa 270°C liegen. Demgegenüber kann der Schmelzpunkt oder das Schmelzintervall des Schmelzklebers typisch in einem Bereich von etwa 100°C bis etwa 150°C liegen. Dass "das Schmelzintervall in einem Bereich liegt" ist so zu verstehen, dass sowohl Anfangs- als auch Endtemperatur des Schmelzintervalls innerhalb des fraglichen Temperaturbereichs liegen sollen. Dass ein Schmelzintervall "tiefer" liegen soll als ein anderes Schmelzintervall hat die Bedeutung, dass der obere Temperaturgrenzwert des tiefer liegenden Schmelzintervalls gleich oder niedriger ist als der untere Temperaturgrenzwert des höher liegenden Schmelzintervalls.

Die Fasern in der Verdunstungsmatte sind mit einem Überzug beschichtet, der ein ausgehärtetes und mutmasslich quervernetztes Reaktionsprodukt aus einem Polyamin und einem veretherten Polyalkylenglycol enthält.

Die Herstellung des Reaktionsproduktes selber, d.h. vor seiner Aushärtung, wird im Folgenden beschrieben.

Als das Polyamin eignen sich alle organischen Verbindungen, die mindestens zwei Aminogruppen aufweisen, die primär oder sekundär sind. Vorzugsweise sind die Polyamine mit zwei oder mehr primären oder sekundären Aminogruppen substituierte Kohlenwasserstoffe, wobei der Kohlenwasserstoffrest geradkettig oder verzweigt, bevorzugt geradkettig ist, in seiner Hauptkette vorzugsweise 2 bis 8 Kohlenstoffatome aufweist und die Hauptkette wahlweise durch ein bis drei funktionelle Gruppen ausgewählt aus -NH-, -O-, -NHCO-, -NHCONH- und -OCONH- unterbrochen sein kann, mit der Massgabe, dass in der Hauptkette jeweils zwei am nächsten beieinander liegende solche funktionellen Gruppen über eine wahlweise substituierte Alkylenbrücke von mindestens zwei Kohlenwasserstoffatomen Länge miteinander verbunden sind. Dass der oben erwähnte Kohlenwasserstoffrest "verzweigt" sein kann bedeutet vorzugsweise, dass an den Kohlenwasserstoffrest eine aus Methyl und Ethyl ausgewählte Seitenkette substituiert sein kann. Desgleichen bedeutet, dass die besagte Alkylenbrücke "wahlweise substituiert" sein kann, ebenfalls bevorzugt, dass ein aus Methyl oder Ethyl ausgewählter Substituent an der Alkylenbrücke vorhanden sein kann.

Beispiele für die erfindungsgemäss einsetzbare Klassen von Polyaminen sind:

a) die linearen 1,$\overline{\omega}$-Diaminoalkane $H_2N$-$(CH_2)_m$-$NH_2$, wobei m bevorzugt 2 bis 8, eher bevorzugt 2 bis 4 ist; Beispiele sind 1,2-Diaminoethan, 1,3-Diaminopropan, 1,4-Diaminobutan, 1,5-Diaminopentan oder 1,6-Diaminohexan;

b) die Polyamine, die durch Umsetzung der 1,ω-Diaminoalkane gemäss a), insbesondere derjenigen mit eher bevorzugtem m von 2 bis 4, mit Acrylnitril und anschliessender katalytischer Hydrierung erhältlich sind; diese Polyamine weisen, wenn das Acrylnitril gegenüber den Aminogruppen unterschüssig eingesetzt wird, hauptsächlich die Struktur $H_2N$-$(CH_2)_3$-NH-$(CH_2)_m$-$NH_2$ auf; wenn das Acrylnitril äquimolar oder überschüssig eingesetzt wird, haben die Polyamine hauptsächlich die Struktur $H_2N$-$(CH_2)_3$-NH-$(CH_2)_m$-NH-$(CH_2)_3$-$NH_2$;

c) die Polyamine, die durch Umsetzung der 1,ω-Diaminoalkane gemäss a), insbesondere derjenigen mit eher bevorzugtem m von 2 bis 4, mit Aziridin erhältlich sind; diese Polyamine haben, wenn das Aziridin gegenüber den Aminogruppen unterschüssig eingesetzt wird, hauptsächlich die Struktur $H_2N$-$(CH_2)_2$-NH-$(CH_2)_m$-$NH_2$; wenn das Aziridin äquimolar oder überschüssig eingesetzt wird, weisen die Polyamine hauptsächlich die Struktur $H_2N$-$(CH_2)_2$-NH-$(CH_2)_m$-NH-$(CH_2)_2$-$NH_2$ auf;

d) die Polyamine, die durch Umsetzung von linearen aliphatischen 1,ω-Diisocyanaten OCN-$(CH_2)_k$-NCO (wobei k bevorzugt 2 bis 4 ist) mit den 1,ω-Diaminen gemäss a) erhältlich sind; diese Polyamine haben, wenn das Diamin gegenüber den Isocyanatgruppen unterschüssig eingesetzt wird, hauptsächlich die Struktur $H_2N$-$(CH_2)_m$-NH-CONH-$(CH_2)_k$-$NH_2$ auf; wenn das Diamin äquimolar oder überschüssig eingesetzt wird, haben die Polyamine hauptsächlich die Struktur $H_2N$-$(CH_2)_m$-NHCONH-$(CH_2)_k$-NHCONH-$(CH_2)_m$-$NH_2$;

e) die Polyamine, die durch Umsetzung von linearen aliphatischen 1,ω-Bis-Carbonsäurehalogeniden XCO-$(CH_2)_p$-OCX (p ist bevorzugt 2 bis 6) mit den 1,ω-Diaminen gemäss a) im Überschuss gegenüber den Säurehalogenidgruppen erhältlich sind; diese Polyamine haben hauptsächlich die Struktur $H_2N$-$(CH_2)_m$-NH-CO-$(CH_2)_p$-CONH-$(CH_2)_m$-$NH_2$.

f) Weitere beispielhafte Klassen von Polyaminen können erhalten werden, indem von Glykolen oder Polyetherdiolen ausgegangen wird. Das Glykol (mit der allgemeinen Struktur $HO-(CH_2)_s-OH$, wobei s bevorzugt 2 oder 3 ist) oder das Polyetherdiol (mit der allgemeinen Struktur $HO-(CHYCHZO)_q-H$, wobei Y und Z Wasserstoff oder Methyl sind, und q bevorzugt 2 bis 4 ist) können zunächst mit gegenüber den Hydroxygruppen überschüssigem 1,ω-Dihalogenalkan (d.h. mehr als ein Mol Dihalogenalkan pro Mol Hydroxygruppen) und dann mit überschüssigem Ammoniak umgesetzt werden. Das 1,ω-Dihalogenalkan hat die Struktur $X-(CH_2)_t-X$, wobei X aus Chlor, Brom und Jod ausgewählt ist und t bevorzugt 2 bis 4 ist. Beispiele sind etwa 1,2-Dibromethan, 1,3-Dibrompropan und 1,3-Dichlorpropan. Wenn von dem Glykol ausgegangen wird, weisen die so erhaltenen Polyamine die Struktur $H_2N-(CH_2)_t-O-(CH_2)_s-O-(CH_2)_t-NH_2$ auf; wenn von dem Polyetherdiol ausgegangen wird, weisen sie die Struktur $H_2N-(CH_2)_t-O-(CHYCHZO)_q-(CH_2)_t-NH_2$ auf.

Ein bevorzugtes Polyamin ist Bis(2-aminoethyl)amin (= Diethylentriamin).

Zur Herstellung des Reaktionsproduktes, mit dem das textile Flächengebilde beschichtet wird, wird das oben beschriebene Polyamin mit einem veretherten Polyalkylenglycol umgesetzt. Dass das Polyalkylenglycol "verethert" ist, bedeutet, dass die beiden endständigen Hydroxylgruppen des Polyalkylenglycols verethert sind. Die verethernden Gruppen weisen vor der Reaktion mit dem Polyamin die Struktur $X-CH_2[CH(OR)]_wCH_2-$ auf, worin w, X und R die eingangs erwähnte Bedeutung haben. Das Polyalkylenglycol selber kann entweder eine Reinsubstanz der Formel $HO-(CHYCHZO)_v-H$ sein, worin v eine ganze Zahl von bevorzugt 1 bis 4 ist und Y und Z unabhängig voneinander Methyl oder Wasserstoff sind. In der Regel ist das Polyalkylenglycol ein Gemisch von homologen Verbindungen der Formel $HO-(CHYCHZO)_v-H$, die sich in der Zahl der repetitiven Einheiten v voneinander unterscheiden, und worin Y und Z ebenfalls aus Wasserstoff und Methyl ausgewählt sind. Anstelle des v beschreibt man dieses Polyalkylenglycol-Gemisch mittels seines Massen-Mittelgewichts $M_w$:

$$M_w = \frac{\sum_{i=1}^{Z} N_i M_i M_i}{\sum_{i=1}^{Z} N_i M_i}$$

in welcher Formel i ein über alle vorhandenen Homologe des Polyalkylenglycols laufender Index ist, und $N_i$ bzw. $M_i$ die Anzahl der Moleküle des i-ten Homologen bzw. das Molekulargewicht des i-ten Homologen sind. Dieses mittlere Molekulargewicht $M_w$ kann, wie in der Technik üblich, über Lichtstreuungsmessungen nach dem Prinzip des "Multi Angle Light Scattering" (MALLS) mit Laserlicht an verdünnten Lösungen der Verbindung bestimmt werden. Im Falle eines Gemisches von Homologen liegt das $M_w$ bevorzugt in einem Bereich von 200 bis 1000 g/mol, eher bevorzugt in einem Bereich von 400 bis 800 g/mol und besonders bevorzugt ist es etwa 600 g/mol.

Bevorzugt ist in der Formel $HO-(CHYCHZO)_v-H$ mindestens eines von Y und Z Wasserstoff, und eher bevorzugt sind sowohl Y als auch Z Wasserstoff. In letzterem Fall ist das Polyalkylenglycol also ein Polyethylenglycol.

Das mit $X-CH_2CH_2-$ veretherte Polyalkylenglycol (d.h. wenn w 0 ist) kann, wie in der Technik üblich, durch direkte Herstellung aus $X-CH_2CH_2-OH$ (wobei X die oben erwähnte Bedeutung hat) mit einem Alkylenoxid der Formel

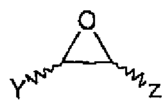

worin Y und Z die oben angegebene Bedeutung haben, in einem vielfachen, gewünschten Molüberschuss (bezogen auf $X-CH_2CH_2-OH$) erhalten werden, gefolgt von einer Umsetzung mit 1 Äquivalent $X-CH_2CH_2-X$ (bezogen auf $X-CH_2CH_2-OH$, wobei X die oben angegebene Bedeutung hat) in Gegenwart einer Hilfsbase.

Das mit $X-CH_2CH(OR)CH_2-$ veretherte Polyalkylenglycol (d.h. wenn w 1 ist) kann, wenn X Halogen und R Wasserstoff bedeuten, durch Umsetzung eines Polyalkylenglycols der Formel $HO-(CHYCHZO)_v-OH$, worin v, Y und Z die oben angegebene Bedeutung haben, oder eines Gemisches solcher Polyalkylenglycole, mit einem Epihalohydrin der Struktur

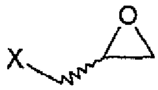

worin X die oben angegebene Bedeutung hat, erhalten werden. Diese Reaktion kann in Analogie zu Beispiel IX, Zeilen 5-16 der US-A-3,347,803 erfolgen.

Das mit X-$CH_2CH(OR)CH_2$- veretherte Polyalkylenglycol (d.h. wenn w 1 ist) kann, wenn X und OR zusammen -O- bedeuten sollen, aus dem entsprechenden, oben beschriebenen, veretherten Polyalkylenglycol mit X als Halogen und R als Wasserstoff erhalten werden, indem letzteres beispielsweise mit Natriumaluminat umgesetzt wird (siehe Zeilen 63-66 von Beispiel V der US-A-3,347,803).

Die Reaktion des Polyamins mit dem veretherten Polyalkylenglycol kann in Analogie zu vorbekannten Verfahren in wässeriger Lösung und in Anwesenheit einer Hilfsbase wie etwa NaOH erfolgen. Das Verhältnis von verethertem Polyalkylenglycol zu Polyamin kann bevorzugt so gewählt werden, dass das Molverhältnis von reaktionsfähigen Halogen- und/oder Epoxygruppen zu den an Amingruppen gebundenen reaktionsfähigen Wasserstoffatomen im Bereich von etwa 4 : 7 bis etwa 7 : 5 liegt. Die Konzentration der wässerigen Lösung ist bevorzugt dergestalt, dass sie etwa 50 bis etwa 75 Gewichtsprozent an den Reaktanden umfasst. Die Reaktionstemperatur beträgt bevorzugt etwa 80° bis etwa 150°C, wobei bevorzugt unter Rückfluss erhitzt wird. Die Reaktionsdauer kann bevorzugt etwa 1 bis etwa 4 Stunden sein.

Das aus Polyamin und verethertem Polyalkylenglycol erhaltene Reaktionsprodukt kann direkt als konzentrierte wässerige Lösung verwendet werden. Zwecks Verbesserung der Lagerstabilität kann diese Lösung mit Säure, etwa mit Mineralsäure wie HCl, auf einen Wert von etwa 5,0 bis etwa 6,0 eingestellt werden.

Als solche Reaktionsprodukte lassen sich auch handelsübliche, unter die erfindungsgemässe Definition fallenden Erzeugnisse verwenden, die, wie eingangs erwähnt, auf dem Gebiet der Bekleidung zur antistatischen Beschichtung von Textilien verwendet werden. Erfindungsgemäss bevorzugte Beispiele für solche Erzeugnisse sind die von der Henkel vertriebenen Produkte Nonax 1166, Nonax 975 und Katax 570.

Gewünschtenfalls können dem Reaktionsprodukt zur Verbesserung der Benetzung des textilen Flächengebildes, wenn das Reaktionsprodukt als Lösung auf das Flächengebilde aufgetragen wird, Tenside beigemischt werden. Der zugegebene Anteil an Tensiden kann typisch etwa 0,01 bis etwa 0,5 Gewichtsprozent, bezogen auf die Trockenmasse des Reaktionsproduktes, betragen, wobei bevorzugt soviel Tensid zugegeben wird, dass die Lösung des Reaktionsproduktes, wie sie für das Auftragen auf das textile Flächengebilde eingesetzt wird, eine Oberflächenspannung von höchstens 40 mN/m aufweist. Das Tensid ist nicht kritisch. Bevorzugte Beispiele für geeignete Tenside sind nichtionische Tenside (etwa Alkylphenolethoxylate, Fettalkoholethanolamine, Fettsäurediethanolamide und Alkylfluorethoxylate) oder anionische Tenside (etwa Alkylsulfate, Perfluoralkylcarboxylate und Perfluoralkylsulfonate).

Zur Herstellung der bevorzugten verfestigten Vliese kann das Verkleben der Fasern mit dem jeweiligen Bindemittel, das typisch in Form einer wässerigen Dispersion vorliegt, besprüht und die Vernetzung (und gewünschtenfalls gleichzeitiger wellenförmige Formgebung, siehe auch unten) mit Erhitzen bewirkt werden. Wenn, wie erfindungsgemäss bevorzugt, für die Verfestigung des Vlieses ein Schmelzkleber verwendet wird, kann dieser bereits während der aerodynamischen, mechanischen oder hydrodynamischen Herstellung des Vlieses in Form eines Pulvers oder in Form von Fasern den gerüstbildenden Fasern beigemischt werden. Bevorzugt wird der Schmelzkleber aber in Form einer Beschichtung auf den gerüstbildenden Fasern eingesetzt, die die gerüstbildende Faser ganz oder teilweise umhüllt. Solche mit Schmelzkleber beschichteten Fasern sind in der Technik als Bikomponenten-Fasern bekannt. Die Bikomponenten-Fasern, bei denen der Schmelzkleber die gerüstbildende Faser ganz umhüllt, sind auch als "Mantel-Kern"-Fasern (englisch "core-sheath") bekannt. Für die Fasern, bei denen der Schmelzkleber als weiterer Strang parallel zu der gerüstbildenden Faser verläuft und so diese nur teilweise umhüllt, hat sich auch im deutschen Sprachraum die Bezeichnung "side-by-side"-Fasern eingebürgert. Die Herstellung von teilweise oder ganz mit Schmelzkleber umhüllten Fasern ist bekannt und es wird nur auf die zugehörige Fachliteratur verwiesen. Beispiele von im Handel erhältlichen, erfindungsgemäss einsetzbaren "Mantel-Kern"-Fasern sind solche mit Polyester-Kern (insbesondere Polyethylenterephthalat) und einem Mantel aus einem Copolyester wie vorstehend beschrieben; Handelsmarken sind hier Trevira® der Hoechst und Grilene® der Ems Chemie. Weitere Beispiele sind solche mit Polypropylen oder Polyethylenterephthalat im Kern und mit Polyethylen im Mantel; eine entsprechende Handelsmarke ist ES® Fiber der Chisso Corporation. Ein Beispiel für im Handel erhältliche "side-by-side"-Fasern sind ES® Fiber der Chisso Corporation, diese weisen Polypropylen als gerüstbildende Faser und Polyethylen als Schmelzkleber auf.

Erfindungsgemäss werden in einer ersten eher bevorzugten Ausführungsform des Flächengebildes mit verfestigten Vliesen "Mantel-Kern"-Fasern, wahlweise unter Zusatz von gewöhnlichen gerüstbildenden Fasern aus einem einheitlichen Kunststoff eingesetzt. Das Gewichtsverhältnis zwischen gewöhnlichen gerüstbildenden Fasern und "Mantel-Kern"-Fasern kann typisch im Bereich von 0 : 100 bis etwa 80 : 20 liegen. Der Titer der "Mantel-Kern"-Fasern ist bevorzugt gleich dem Titer der gewöhnlichen, gerüstbildenden Fasern.

In einer anderen eher bevorzugten Ausführungsform des Flächengebildes mit verfestigten Vliesen werden

gewöhnliche gerüstbildenden Fasern aus einem einheitlichen Kunststoff, gemischt mit Fasern aus einem Schmelzkleber eingesetzt. Das Gewichtsverhältnis zwischen gewöhnlichen gerüstbildenden Fasern und Schmelzkleberfasern kann typisch im Bereich von 40 : 60 bis etwa 80 : 20 liegen; bevorzugt ist es mindestens etwa 50 : 50. Der Titer der Schmelzklebefasern ist bevorzugt gleich dem Titer der gewöhnlichen, gerüstbildenden Fasern.

Das Auftragen des oben beschriebenen Reaktionsproduktes auf das textile Flächengebilde geschieht bevorzugt durch Aufsprühen einer wässerigen Lösung des Reaktionsproduktes, oder durch Eintauchen des Flächengebildes in diese Lösung. Bevorzugt wird die Lösung aufgesprüht. Die Konzentration der wässerigen Lösung des Reaktionsproduktes beträgt bevorzugt etwa 0,1 bis etwa 10 Gewichtsprozente Feststoff, bezogen auf das Gewicht der Lösung, eher bevorzugt beträgt sie etwa 0,5 bis etwa 5 Gewichtsprozent. Die Sprüh- oder Tauchlösung wird bevorzugt mit einem alkalischen Agens wie etwa Natriumcarbonat auf einen pH im Bereich von 6 bis 7 gestellt. Die Benetzung des textilen Flächengebildes mit der Sprühlösung ist bevorzugt dergestalt, dass das Reaktionsprodukt in einer Menge von 1 bis 10 Gewichtsprozenten Trockenmasse, bezogen auf das textile Flächengebilde, aufgetragen wird.

Wenn eine erhöhte Flammwidrigkeit gewünscht wird, kann dieser wässerigen Sprühlösung ein üblicher, aber wasserunlöslicher Flammhemmer in einer Menge von bis zu 20 Gewichtsprozenten, bezogen auf die Lösung, oder von bis zu 20 Gewichtsteilen pro Gewichtsteil der Trockenmasse des Reaktionsproduktes, beigemischt werden, wobei die zuzugebende Menge des Flammhemmers von seiner Wirksamkeit und seiner Löslichkeit bestimmt sein kann. Beispiele für einsetzbare Flammhemmer sind Alumniniumtrihydrat, roter Phosphor, Polyphosphate, Pentachlorphenol-Derivate, Antimontrioxid, Melamin, Melaminphosphat und wasserunlösliche, flammhemmende Phosphonsäuren und deren Ester. Ein bevorzugtes Beispiel für einen Flammhemmer sind Phosphonsäureester der folgenden Formel:

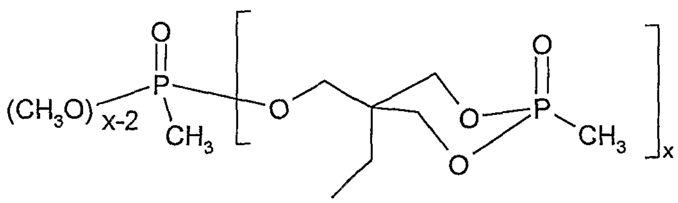

in welcher Formel x 0 oder 1 ist. Flammhemmer dieses Typs werden etwa von der Albright & Wilson unter der Handelsmarke Amgard® vertrieben.

Vor dem Aushärten des Reaktionsproduktes wird die aufgetragene Sprühlösung getrocknet, vorzugsweise bei Normaldruck und einer Temperatur im Bereich von 80°C bis 150°C während einer Zeit von typisch 1 bis 3 Minuten.

Das Aushärten des getrockneten Reaktionsproduktes auf dem textilen Flächengebilde kann typisch bei einer Temperatur von etwa 100°C bis etwa 180°C während einer Zeit von 5 Sekunden bis etwa 3 Minuten geschehen, in Analogie zu den entsprechenden Aushärtungsverfahren auf dem Gebiet der Bekleidungsindustrie, wobei auch der Aushärtungsgeschwindigkeit des jeweiligen Reaktionsproduktes Rechnung getragen werden kann; Die Temperatur und Dauer der Aushärtung wird zweckmässig so gewählt, dass die reaktiven Gruppen des verethernden Restes des Polyalkylenglycols, d.h. die organisch gebundenen Halogenatome oder die Epoxygruppen, mit den Amingruppen des Polyamins reagieren, so dass ein in der zu verdunstenden Flüssigkeit nicht mehr lösliches ausgehärtetes Material entsteht.

Wenn das textile Flächengebilde ein verfestigtes Vlies ist, wird das vorstehend beschriebene Aushärten des Reaktionsproduktes vorzugsweise gleichzeitig mit der oben beschriebene Thermofusion der gerüstbildenden Fasern und in einem Schritt, unter wahlweiser gleichzeitiger mechanischer Verformung des Vlieses mit beheizten Positiv-/Negativ-Werkzeugen durchgeführt. Dies erlaubt es, gleichzeitig neben den Verkleben der Fasern mittels Thermofusion und dem Aushärten des Reaktionsproduktes dem Vlies auch eine Form zu geben, die sich vorteilhaft auf die Strömung des Gasstroms, der das zu verdunstende Wasser aufnehmen soll, auswirkt. Das wiedererkaltete, verfestigte Vlies behält dann die durch die Werkzeuge erzwungene Form bei.

Wenn das vorstehende Verfahren an einem Vlies durchgeführt wird, dessen Fasern im Wesentlichen "Mantel-Kern"-Fasern sind, ergibt sich der weitere Vorteil, dass das Reaktionsprodukt nicht nur unter Vernetzung aushärtet, sondern gleichzeitig auch unter Thermosolierung teilweise in den Schmelzkleber, der den Mantel der Fasern bildet, eingebaut wird, was die Haftung des ausgehärteten Reaktionsproduktes auf dem Vlies weiter verbessert.

Eine bevorzugte Form für die Verdunstungsmatte, insbesondere auch für die erfindungsgemässen Verdunstungsmatten, ist eine quadratische oder rechteckige Form. Bevorzugt ist sie dergestalt wellenförmig verformt, das sie etwa wie ein quadratisches oder rechteckiges Wellblech aussieht. Ebenfalls bevorzugt ist hier das textile Flächengebilde ein mittels Schmelzkleber verfestigtes Vlies. Die Richtung der besagten Wellen verläuft bevorzugt geradlinig und diagonal über die quadratische oder rechteckige Verdunstungsmatte, etwa in einem Winkel $\alpha$ von typisch 20° bis 60°, bevorzugt etwa 30 bis etwa 45° zur Horizontalen, wobei bei rechteckigen Verdunstungsmatten bevorzugt die längere Seite als querliegend angesehen ist. Die Richtung der Wellen kann über die gesamte Ausdehnung des Vlieses konstant sein; bevorzugt wechselt die Richtung aller Wellen aber an einer Stelle der Verdunstungsmatte unter Ausbildung eines Knickes

auf einen Winkel 180°-α, so dass jeweils eine Welle wie ein nach oben oder nach unten geöffnetes V aussieht. Die Richtung der Wellen könnte auch zickzackförmig in regelmässigen Abständen (z.B. alle 10 bis alle 50 cm, je nach Einsatzgebiet der Verdunstungsmatte) diese Richtung ändern, wobei die Richtungsänderungen alternierend von einem besagten Winkel α zu einem besagten Winkel 180°-α und umgekehrt erfolgen.

Einige der in den erfindungsgemässen Vorrichtungen einzusetzenden Verdunstungsmatten sind selber neu und daher ebenfalls Gegenstand der Erfindung. Es handelt sich um Verdunstungsmatten, die ein verfestigtes Vlies mit Fasern aus einem thermoplastischen Kunststoff enthalten, die sich an Kreuzungsstellen berühren und an diesen Kreuzungsstellen mittels eines thermoplastischen Bindemittels, eines duroplastischen Bindemittels oder eines thermoplastischen Schmelzklebers miteinander verbunden sind, wobei die Oberfläche der Fasern mit einem Überzug beschichtet ist, der ein ausgehärtetes Reaktionsprodukt aus einem Polyamin und aus einem mit Endgruppen der Struktur $X-CH_2[CH(OR)]_wCH_2-$ veretherten Polyalkylenglycol umfasst, in welcher Struktur w eine ganze Zahl von 0 bis 1 ist und, wenn w 0 ist, X ein Halogen bedeutet, und, wenn w 1 ist, X Halogen und R Wasserstoff bedeuten oder X und OR zusammen -O- bedeuten.

Die erfindungsgemässen Vorrichtungen zur Verdunstung von Flüssigkeiten lassen sich in der Luftbefeuchtung, der Aufkonzentrierung von Lösungen oder zur Kühlung einsetzen. Bei der Luftbefeuchtung ist die zu verdunstende Flüssigkeit in erster Linie Wasser, also etwa ein normales Leitungswasser oder ein entsalztes Wasser. Bei der Aufkonzentrierung von Lösungen kann die Flüssigkeit eine beliebige Lösung eines nichtflüchtigen Stoffes in Wasser, einem organischen Lösungsmittel oder einem gemischt wässerigen/organischen Lösungsmittel sein. Als beispielhafte nichtflüchtige Stoffe sind anorganische oder organische Salze oder organische Stoffe wie etwa Zucker, Zuckerabfälle oder Farbstoffe denkbar. Konkrete Beispiele für aufzukonzentrierende Lösungen sind Meerwasser, verbrauchte Galvanikbäder oder Fotochemikalienlösungen, Deponiesickerwässer, Abwässer aus der chemischen Industrie und verbrauchte Elektrolytlösungen aus elektrochemischen Prozessen wie etwa der elektrochemischen Raffination von Edelmetallen, oder aufzukonzentrierende Lösungen von Salzen der Edelmetalle selber. Für die Kühlung wird in der Regel als zu verdunstende Flüssigkeit Wasser eingesetzt, etwa in Nasskühlern. Denkbar sind aber auch Kältemittel wie etwa Freone oder Ammoniak. Entsprechende Verfahren sind ebenfalls Gegenstand der Erfindung.

Wichtig für das Funktionieren der erfindungsgemässen Verfahren ist, wie auch bei herkömmlichen Verdunstungsverfahren, dass die benetzte Verdunstungsmatte mit einem Gasstrom überströmt wird, in dem der Partialdruck der zu verdunstenden Flüssigkeit kleiner ist als der Partialdruck dieser Flüssigkeit, der in dem Gasstrom vorhanden wäre, wenn er mit der Flüssigkeit im thermodynamischen Gleichgewicht wäre. Ansonsten würde keine Verdunstung der Flüssigkeit stattfinden.

Die Erfindung wird nun im Folgenden durch konkrete Ausführungsbeispiele unter Bezug auf die Figuren erläutert, in welchen Figuren:

- Figur 1 eine einzelne erfindungsgemässe Verdunstungsmatte zeigt;

- Figur 2 einen Verbund aus mehreren Verdunstungsmatten gemäss Figur 1 zeigt; und

- Figur 3 eine erfindungsgemässe Verdunstungsvorrichtung in Form eines Luftbefeuchters zeigt, bei der die Wasserzufuhr mittels eines Rohrs geschieht, das Wasser von oben auf die Verdunstungsmatten rieselt.

Figur 1 zeigt eine erfindungsgemässe rechteckige Verdunstungsmatte. Das textile Flächengebilde 1 ist ein aerodynamisch hergestelltes Vlies aus gerüstbildenden Bikomponentenfasern des "Kern-Mantel"-Typs (Trevira 254 der Trevira GmbH, Kern Polyethylenterephthalat, Mantel Copolyester, kreisförmiger Faserquerschnitt, Titer 2,2 dtex, Faserlänge 50 mm), das mechanisch durch Vernadelung vorverfestigt ist. Das ausgehärtete Reaktionsprodukt aus Polyamin und verethertem Polyalkylenglycol ist als Oberflächenbeschichtung 2 auf dem Vlies angedeutet. Die Verdunstungsmatte ist wellenförmig verformt, hat also etwa die Form eines Wellblechs. Die Scheitellinien der Täler (nur zwei davon sind als Linien B, B' bezeichnet) und die Scheitellinien der Kämme (nur zwei davon sind als Linien C, C' bezeichnet) der Wellen verlaufen parallel zueinander, wobei die Scheitellinien (B, B') aller Täler auf einer gedachten ersten Ebene liegen (in der Figur nicht gezeigt) und die Scheitellinien (C, C') alle Kämme auf einer gedachten zweiten Ebene liegen (in der Figur nicht gezeigt), und wobei die erste und zweite Ebene parallel zueinander verlaufen. Die Richtung der Wellen ändert in einem V-förmigen Knick in Winkeln von etwa 30° und 150° an einer bestimmten Stelle der Verdunstungsmatte, wobei diese Stelle durch den Schnittpunkt der Scheitellinien (C, C') der Kämme dieser Welle mit einer gedachten geraden Linie A, die tangential alle Wellenkämme berührt, definiert ist, und wobei die Richtungsänderung für alle Wellen dieselbe ist. Diese Schnittpunkte sind als schwarze Kreise dargestellt. Die Herstellung der Verdunstungsmatte wurde hier wie folgt durchgeführt: Ein im Handel erhältliches Reaktionsprodukt (Nonax 1166, Henkel) wurde als wässerige Lösung, enthaltend, bezogen auf die Lösung, 5 Gewichtsprozent Reaktionsprodukt (als Feststoff) und 5 Gewichtsprozent Flammhemmer (Flameguard HCA PW), die mit 10%iger wässeriger Natriumcarbonatlösung auf einen pH von 6 bis 7 eingestellt war, eingesetzt. Diese Lösung wurde mit einem Airspray-, Airmix- oder Airless-System auf das noch nicht verfestigte

Vlies in einer Menge von 120 g pro $m^2$ Vlies aufgesprüht. Das besprühte Vlies wurde während 1,5 min bei 130°C (oder 1 min bei 150°C) getrocknet. Das trockene Vlies wurde in eine Tiefziehpresse mit beheizbarer gewellter Unterlage gelegt und mittels eines beheizbaren, formschlüssig in die Unterlage eingreifenden Stempels während 10 sec bei 100°C in die gewünschte Wellenform gepresst und verfestigt, wobei gleichzeitig das Reaktionsprodukt aus Polyamin und verethertem Polyalkylenglycol aushärtete und sich gleichzeitig mit dem Schmelzkleber teilweise unter Thermosolierung verband.

Figur 2 zeigt einen Verbund aus vielen (gezeigt: 14) Verdunstungsmatten von Figur 1. Nur die vordersten drei sind mit Bezugszeichen 31, 32 und 33 bezeichnet. Zu besseren Veranschaulichung ist die vorderste Verdunstungsmatte 31 teilweise aufgeschnitten gezeigt. Die Verdunstungsmatten sind dabei so nebeneinander gelegt, dass die V-Formen der Wellen alternierend nach oben und nach unten zeigen, wobei die Knicke der Wellen auf den Schnittstellen ihrer Kämme mit gedachten Linien A (Matte 31) und A' (Matte 32) verlaufen, wobei die Linien A, A' parallel zueinander, aber gegeneinander versetzt sind. Der Flüssigkeitsstrom wird dabei bevorzugt von oben in den Verbund geleitet (mittels des schwarzen Pfeils angedeutet). Der Gasstrom, der die zu verdunstende Flüssigkeit aufnehmen soll (d.h. typischerweise der Luftstrom) wird bevorzugt seitlich in den Verbund geleitet (durch einen weissen Pfeil angedeutet), so dass Flüssigkeit und Gasstrom im Kreuzstrom aneinander vorbeigeführt werden.

Figur 3 zeigt eine erfindungsgemässe Vorrichtung zum Verdunsten von Wasser, wie sie typisch als Luftbefeuchter eingesetzt würde. Diese Vorrichtung ist dafür konzipiert, dass sie in einem Gebäude-Luftschacht montiert wird, der mittels Ventilatoren für den nötigen Durchzug der zu befeuchtenden Luft sorgt. Die Vorrichtung des gezeigten Beispiels weist vier Verbunde 301, 302, 303 und 304 von erfindungsgemässen Verdunstungsmatten ähnlich desjenigen von Figur 2 auf, die senkrecht stehend in einer Rahmenkonstruktion 4 montiert sind. Im Verbund 303 ist die Wellenform und Orientierung der einzelnen Verdunstungsmatten angedeutet. Der zu befeuchtende Luftstrom würde bevorzugt von hinten in die Verbunde hineingeführt und würde an der Vorderseite der Verbunde wieder austreten. In jedem dieser Verbunde sind typisch etwa 10 bis 100 hintereinander gelagerte Verdunstungsmatten vorhanden. Über Leitungen 51,52 wird Wasser in Verteilerkästen 61,62 geführt. In diesen Verteilerkästen befindet sich an der Oberkante der Verbunde 301,302 ein einzelnes oder mehrere Rohr(e) (in der Figur nicht sichtbar), das/die eine Vielzahl von Öffnungen aufweist/aufweisen, die das Wasser auf die beiden Verbunde 301,302 und an ihnen herunter rieseln lassen. Der zu befeuchtende Luftzug und der Flüssigkeitsstrom werden also vorzugsweise im Kreuzstrom durch die Verbunde hindurchgeführt. Es wurde gefunden, dass die Beschichtung auf den Verdunstungsmatten soweit hydrophil ist, dass ein Benetzen aller Verdunstungsmatten eines Verbundes nicht nötig ist; durch das Benetzen nur weniger Verdunstungsmatten eines Verbundes saugen sich schlussendliche alle im Verbund vorhandenen Verdunstungsmatten voll. Das auf die Verbunde 301,302 gegebene Wasser rieselt an diesen und dann an den darunter liegenden Verbunden 303,304 herunter; überschüssiges, nicht verdunstetes Wasser wird in der Auffangwanne 7 aufgefangen. Die Beschickung der Röhren 51,52 mit Wasser erfolgt mittels der Wasserpumpe 8. Das Zufuhrwasser kann gewünschtenfalls mit einer UV-Entkeimung 9 bakterienfrei gemacht werden.

Anstelle der Beschickung mit Röhren, die das Wasser von oben herab auf die Verbunde 301,302,303,304 rieseln lassen, könnte auch eine Anordnung von Düsen verwendet werden. Diese Düsen würden zweckmässig auf einem senkrechten Rost oder Gitter montiert, der oder das in einem geeigneten Abstand von den Verbunden 301,302,303,304 senkrecht montiert wird.

## Patentansprüche

1. Vorrichtung zum Verdunsten von Flüssigkeit, wobei die Vorrichtung eine Verdunstungsmatte aufweist, die mit der Flüssigkeit benetzt ist und an der die Verdunstung der Flüssigkeit geschieht, **dadurch gekennzeichnet, dass** die Verdunstungsmatte ein textiles Flächengebilde (1) mit Fasern umfasst, wobei die Oberfläche der Fasern mit einem Überzug (2) beschichtet ist, der ein ausgehärtetes Reaktionsprodukt aus einem Polyamin und aus einem mit Endgruppen der Struktur $X\text{-}CH_2[CH(OR)]_wCH_2\text{-}$ veretherten Polyalkylenglycol umfasst, in welcher Struktur w eine ganze Zahl von 0 bis 1 ist und, wenn w 0 ist, X ein Halogen bedeutet, und, wenn w 1 ist, X Halogen und R Wasserstoff bedeuten oder X und OR zusammen -O- bedeuten.

2. Vorrichtung nach Anspruch 1, wobei die Fasern aus einem thermoplastischen Kunststoff sind.

3. Vorrichtung nach Anspruch 2, wobei die Fasern aus einem Kunststoff mit einem Schmelzpunkt oder Schmelzintervall im Bereich von 130°C bis 270°C, insbesondere aus Polyethylenterephthalat oder aus Polypropylen, bestehen.

4. Vorrichtung nach einem der Ansprüche 1 bis 3, wobei das textile Flächengebilde (1) ein Vlies ist.

5. Vorrichtung nach Anspruch 4, wobei das Vlies Kreuzungsstellen aufweist, an denen die Fasern sich berühren, und an denen die Fasern mittels eines thermoplastischen Bindemittels, eines duroplastischen Bindemittels oder eines

thermoplastischen Schmelzklebers miteinander verbunden sind.

**6.** Vorrichtung nach Anspruch 5, wobei die Verdunstungsmatte wellenförmig verformt ist, wobei die Täler und Kämme der Wellen geradlinig und parallel zueinander verlaufen, wobei die Scheitellinien (B, B') aller Täler auf einer gedachten ersten Ebene liegen und die Scheitellinien (C, C') alle Kämme auf einer gedachten zweiten Ebene liegen, und wobei die erste und zweite Ebene parallel zueinander liegen.

**7.** Vorrichtung nach Anspruch 6, wobei die Richtung jeder Welle an einer Stelle der Verdunstungsmatte unter Ausbildung eines Knickes ändert, wobei diese Stelle durch den Schnittpunkt der Scheitellinie (C) des Kamms dieser Welle mit einer gedachten geraden Linie (A), die die Scheitellinien (C, C') aller Wellenkämme schneidet, definiert ist, und wobei die Richtungsänderung für alle Wellen dieselbe ist.

**8.** Vorrichtung nach einem der Ansprüche 1 bis 7, umfassend eine oder mehrere Verdunstungsmatten (31,32,33), die aufeinander liegend miteinander verbunden sind.

**9.** Vorrichtung nach einem der Ansprüche 1 bis 8, umfassend eine oder mehrere Zuführungen, zur intermittenten oder kontinuierlichen Zufuhr von zu verdunstender Flüssigkeit an die Verdunstungsmatte(n).

**10.** Vorrichtung nach Anspruch 9, wobei die Zuführungen Düsen sind, die die Verdunstungsmatte(n) mit der Flüssigkeit besprühen.

**11.** Vorrichtung nach Anspruch 9, wobei die Zuführung ein Rohr mit einer Vielzahl von Öffnungen ist, die die Flüssigkeit auf die Verdunstungsmatte(n) leiten.

**12.** Vorrichtung nach einem der Ansprüche 1 bis 11, wobei der Überzug einen Flammhemmer umfasst.

**13.** Vorrichtung nach Anspruch 12, wobei der Flammhemmer ein Phosphonsäureester der folgenden Formel:

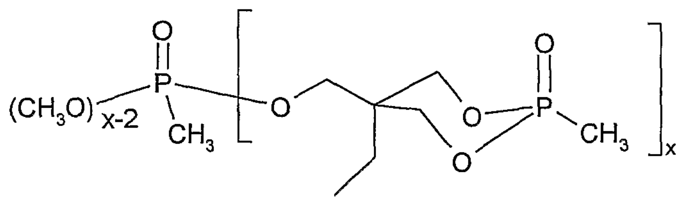

ist, in welcher Formel x 0 oder 1 bedeutet.

**14.** Vorrichtung nach einem der Ansprüche 1 bis 13, wobei das textile Flächengebilde eine Porosität, ausgedrückt als Quotient von Strukturoberfläche pro Flächeneinheit der geometrischen Fläche des textilen Flächengebildes, in einem Bereich von 10 bis 50 aufweist.

**15.** Verdunstungsmatte, umfassend ein verfestigtes Vlies mit Fasern aus einem thermoplastischen Kunststoff, die sich an Kreuzungsstellen berühren und an diesen Kreuzungsstellen mittels eines thermoplastischen Bindemittels, eines duroplastischen Bindemittels oder eines thermoplastischen Schmelzklebers miteinander verbunden sind, wobei die Oberfläche der Fasern mit einem Überzug beschichtet ist, der ein ausgehärtetes Reaktionsprodukt aus einem Polyamin und aus einem mit Endgruppen der Struktur $X\text{-}CH_2[CH(OR)]_wCH_2\text{-}$ veretherten Polyalkylenglycol umfasst, in welcher Struktur w eine ganze Zahl von 0 bis 1 ist und, wenn w 0 ist, X ein Halogen bedeutet, und, wenn w 1 ist, X Halogen und R Wasserstoff bedeuten oder X und OR zusammen -O- bedeuten.

**16.** Verdunstungsmatte nach Anspruch 15, wobei die Fasern aus einem Kunststoff mit einem Schmelzpunkt oder Schmelzintervall im Bereich von 190°C bis 270°C, insbesondere aus Polyethylenterephthalat oder aus Polypropylen, bestehen.

**17.** Verdunstungsmatte nach Anspruch 15 oder 16, wobei der Überzug einen Flammhemmer umfasst.

**18.** Verdunstungsmatte nach Anspruch 17, wobei der Flammhemmer ein Phosphonsäureester der folgenden Formel:

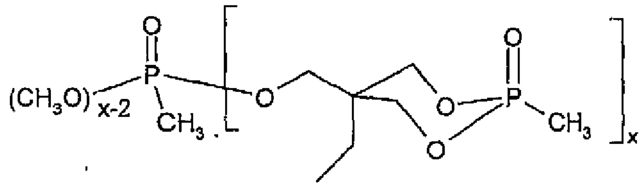

ist, in welcher Formel x 0 oder 1 bedeutet.

**19.** Verdunstungsmatte nach einem der Ansprüche 15 bis 18, die wellenförmig verformt ist, wobei die Täler und Kämme der Wellen geradlinig und parallel zueinander verlaufen, wobei die Scheitellinien (B, B') aller Täler auf einer gedachten ersten Ebene liegen und die Scheitellinien (C, C') aller Kämme auf einer gedachten zweiten Ebene liegen, und wobei die erste und zweite Ebene parallel zueinander liegen.

**20.** Verdunstungsmatte nach Anspruch 19, wobei die Richtung jeder Welle an einer Stelle der Verdunstungsmatte unter Ausbildung eines Knickes ändert, wobei diese Stelle durch den Schnittpunkt der Scheitellinie (C) des Kamms dieser Welle mit einer gedachten geraden Linie (A), die die Scheitellinien (C, C') aller Wellenkämme schneidet, definiert ist, und wobei die Richtungsänderung für alle Wellen dieselbe ist.

**21.** Verfahren zum Verdunsten von Flüssigkeit, wobei eine Verdunstungsmatte wie in Anspruch 1 oder 15 definiert mit der Flüssigkeit benetzt und die benetzte Verdunstungsmatte mit einem Gasstrom überströmt wird, in dem der Partialdruck der zu verdunstenden Flüssigkeit kleiner ist als der Partialdruck dieser Flüssigkeit, der in dem Gasstrom vorhanden wäre, wenn er mit der Flüssigkeit im thermodynamischen Gleichgewicht wäre.

**22.** Verfahren nach Anspruch 21, wobei die Flüssigkeit Wasser ist und das Verdunsten des Wassers der Befeuchtung eines in der Umgebung der Verdunstungsmatte sich befindenden Gasraums dient.

**23.** Verfahren nach Anspruch 22, wobei der Gasraum Luft enthält.

**24.** Verfahren nach Anspruch 21, wobei die Flüssigkeit eine Lösung eines nichtflüchtigen Stoffes in Wasser, in einem organischen Lösungsmittel oder in einem gemischt organischen/wässerigen Lösungsmittel ist, und das Verdunsten der Flüssigkeit dem Aufkonzentrieren des nichtflüchtigen Stoffes in der Flüssigkeit dient.

**25.** Verfahren nach Anspruch 24, wobei die wässerige Lösung eine Salzlösung, eine Zuckerlösung oder ein Deponiesickerwasser ist.

**26.** Verfahren nach Anspruch 21, wobei die Flüssigkeit Wasser, ein organisches Lösungsmittel oder ein gemischt wässerig/organisches Lösungsmittel ist und das Verdunsten der Kühlung der Flüssigkeit dient.

**27.** Verfahren nach Anspruch 26, wobei die wässerige Lösung ein Kühlwasser aus einem Kraftwerks-Kühlturm oder aus einem chemischen Prozess ist.

## Claims

**1.** A device for the evaporation of a liquid whereby the device has an evaporation mat which is wettened by the liquid and on which the evaporation of the liquid occurs, **characterised in that** the evaporation mat comprises a textile fabric (1) with fibres, whereby the surface of the fibres is coated with a coating (2) comprising a cured reaction product of a polyamine and of a polyalkylene glycol etherified with end groups of the structure $X\text{-}CH_2[CH(OR)]_wCH_2$-, in which structure w is an integer of 0 to 1 and, if w is 0, X means a halogen, and, if w is 1, X means halogen and R means hydrogen, or X and OR taken together mean -O-.

**2.** Device according to claim 1, whereby the fibres are of a thermoplastic synthetic material.

**3.** Device according to claim 2, whereby the fibres consist of a thermoplastic synthetic material with a melting point or melt range in the range of 130°C to 270°C, in particular of polyethylene terephthalate or of polypropylene.

4. Device according to one of claims 1 to 3, whereby the textile fabric (1) is a fleece.

5. Device according to claim 4, whereby the fleece has crossing sites at which the fibres are in contact which each other and at which the fibres are adhered together by means of a thermoplastic binder, a duroplastic binder or a thermoplastic hotmelt adhesive.

6. Device according to claim 5, whereby the evaporation mat has a wavy shape whereby the throughs and crests of the waves run in a straight line and in parallel to each other, whereby the valley lines (B, B') of all throughs are on an imaginary first plane and the apex lines (C, C') of all crests are on an imaginary second plane and whereby the first and second imaginary planes are parallel to each other.

7. Device according to claim 6, whereby the direction of each wave changes at a given location of the evaporation mat with formation of a crease, whereby this location is defined by the intersection of the apex line (C) of the crest of that wave with an imaginary straight line (A), which intersects the apex lines (C, C') of all crests, and whereby the change of direction is identical for all waves.

8. Device according to one of claims 1 to 7, comprising one or more evaporation mats (31, 32, 33) which lie atop of each other and which are adhered together.

9. Device according to one of claims 1 to 8, comprising one or more supply lines for the intermittent or continuous supplying of liquid to be evaporated to the evaporation mat(s).

10. Device according to claim 9, whereby the supply lines are nozzles, which spray the liquid onto the evaporation mat(s).

11. Device according to claim 9, whereby the supply line is a tube with a plurality of openings, which feed the liquid onto the evaporation mat(s).

12. Device according to one of claims 1 to 11, whereby the coating comprises a flame retardant.

13. Device according to claim 12, whereby the flame retardant is a phosphonic acid ester of the following formula:

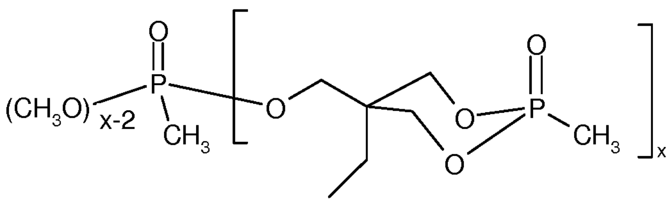

in which formula x means 0 or 1.

14. Device according to one of claims 1 to 13, whereby the textile fabric has a porosity in the range of 10 to 50, calculated as the quotient of total structural surface per unit of geometric surface.

15. Evaporation mat comprising a stiffened fleece with fibres of a thermoplastic synthetic material which are in contact with each other at crossing sites and which at these fibre crossing sites adhere together by means of a thermoplastic binder, a duroplastic binder or a thermoplastic hotmelt adhesive, whereby the surface of the fibres is coated with a coating comprising a cured reaction product of a polyamine and of a polyalkylene glycol etherified with end groups of the structure $X\text{-}CH_2[CH(OR)]_wCH_{2\text{-}}$, in which structure w is an integer number of 0 to 1 and, if w is 0, X means halogen, and, if w is 1, X means halogen and R means hydrogen, or X and OR taken together mean -O-.

16. Evaporation mat according to claim 15, whereby the fibres consist of a synthetic material with a melting point or melt range in the range of 190°C to 270°C, in particular of polyethylene terephthalate or of polypropylene.

17. Evaporation mat according to claim 15 or 16, whereby the coating comprises a flame retardant.

18. Evaporation mat according to claim 17, whereby the flame retardant is a phosphonic acid ester of the following formula:

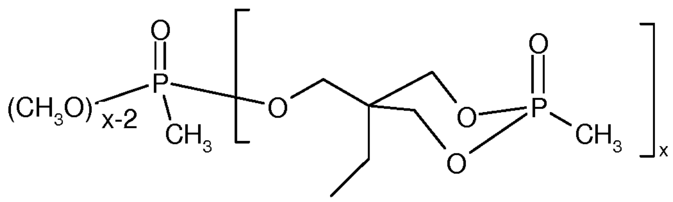

in which formula x means 0 or 1.

**19.** Evaporation mat according to one of claims 15 to 18, having a wavy shape, whereby the throughs and crests of the waves are in a straight line and run in parallel to each other, whereby the valley lines (B, B') of all throughs are on an imaginary first plane and the apex lines (C, C') of all crests are on an imaginary second plane and whereby the first and second imaginary planes are parallel to each other.

**20.** Evaporation mat according to claim 19, whereby the direction of each wave changes at a given location of the evaporation mat with formation of a crease, whereby this location is defined by the intersection of the apex line (C) of the crest of that wave with an imaginary straight line (A), which intersects the apex lines (C, C') of all crests, and whereby the change of direction is identical for all waves.

**21.** A process for the evaporation of a liquid, whereby an evaporation mat as defined in claims 1 or 15 is wettened by the liquid and the wettened evaporation mat is overblown with a stream of gas in which the partial vapour pressure of the liquid to be evaporated is lower than would be the partial vapour pressure of that liquid in that stream of gas if it was at a thermodynamic equilibrium with that liquid.

**22.** Process according to claim 21, whereby the liquid is water and the evaporation of the water serves to humidify a gas-filled space, which is in the vicinity of the evaporation mat.

**23.** Process according to claim 22, whereby the gas-filled space contains air.

**24.** Process according to claim 21, whereby the liquid is a solution of a non-volatile substance in water, in an organic solvent or in a mixed aqueous/organic solvent and the evaporation of the liquid serves to concentrate up the non-volatile substance in the liquid.

**25.** Process according to claim 24, whereby the aqueous solution is a salt solution, a sugar solution or a landfill leachate.

**26.** Process according to claim 21, whereby the liquid is water, an organic solvent or a mixed aqueous/organic solvent and the evaporation serves to refrigerate the liquid.

**27.** Process according to claim 26, whereby the aqueous solution is a coolant from a power plant's cooling tower or from a chemical process.

## Revendications

**1.** Dispositif pour évaporer du liquide, dans lequel le dispositif comporte un tapis d'évaporation qui est mouillé avec le liquide et auquel se fait l'évaporation du liquide, **caractérisé en ce que** le tapis d'évaporation comporte une structure textile surfacique (1) avec des fibres, la surface des fibres étant revêtue d'un revêtement (2) qui comporte un produit de réaction durci à partir d'un polyamine et d'un polyalkylène glycol éthérifié avec des groupes terminaux de la structure $X-CH_2[CH(OR)]_wCH_2$-, dans ladite structure w est un nombre entier de 0 à 1, et lorsque w est 0, X représente un halogène, et lorsque w est 1, X représente un halogène et R représente un hydrogène ou X et OR ensemble représentent-O-.

**2.** Dispositif selon la revendication 1, dans lequel les fibres sont d'un thermoplaste.

**3.** Dispositif selon la revendication 2, dans lequel les fibres consistent d'un plastique ayant un point de fusion ou un intervalle de fusion comprise dans la plage de 130°C à 270°C, en particulier de polyéthylène téréphtalate ou de polypropylène.

**4.** Dispositif selon l'une des revendications 1 à 3, dans lequel la structure textile surfacique (1) est une toison.

**5.** Dispositif selon la revendication 4, dans lequel la toison comporte des endroits de croisement auxquels les fibres se touchent et auxquels les fibres sont interconnectées au moyen d'un agent liant thermoplastique, un agent thermodurcissable ou d'une colle thermofusible.

**6.** Dispositif selon la revendication 5, dans lequel le tapis d'évaporation est déformé de manière ondulatoire, les vallées et les crêtes des ondes s'étendant de manière parallèle et rectiligne l'un par rapport à l'autre, les lignes de raies (B, B') de toutes les vallées étant agencées dans un premier plan imaginaire et les lignes de raies (C, C') de toutes les crêtes étant agencées dans un deuxième plan imaginaire et le premier et le deuxième plan étant agencés de manière parallèle l'un par rapport à l'autre.

**7.** Dispositif selon la revendication 6, dans lequel la direction de chaque onde change à un endroit du tapis d'évaporation par formation d'un coude, cet endroit étant défini par l'intersection de la ligne de raie (C) de la crête de cette onde avec une ligne rectiligne imaginaire (A) qui coupe les lignes de raie (C, C') de toutes les crêtes des ondes, et la direction de changement étant la même pour toutes les ondes.

**8.** Dispositif selon l'une des revendications 1 à 7, comprenant une ou plusieurs tapis d'évaporation (31, 32, 33) qui sont interconnectés en étant superposés.

**9.** Dispositif selon l'une des revendications 1 à 8, comprenant une ou plusieurs alimentations pour une alimentation intermittente ou continue d'un liquide à évaporer au/aux tapis d'évaporation.

**10.** Dispositif selon la revendication 9, dans lequel les alimentations sont des tuyères qui aspergent le/les tapis d'évaporation avec le liquide.

**11.** Dispositif selon la revendication 9, dans lequel l'alimentation est un tuyau avec une multitude d'ouvertures qui mènent le liquide sur le/les tapis d'évaporation.

**12.** Dispositif selon l'une des revendications 1 à 11, dans lequel le revêtement comprend un ignifuge.

**13.** Dispositif selon la revendication 12, dans lequel l'ignifuge est un ester d'acide phosphonique de la structure suivante:

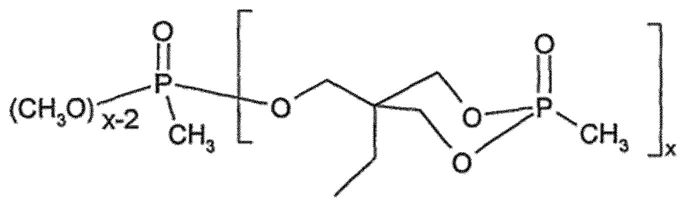

dans laquelle structure x représente 0 ou 1.

**14.** Dispositif selon l'une des revendications 1 à 13, dans lequel la structure textile surfacique comporte une porosité exprimée par le quotient de la surface texturée par unité de surface de surface géométrique de la structure textile surfacique, dans une plage de 10 à 50.

**15.** Tapis d'évaporation comprenant une toison solidifiée avec des fibres d'un thermoplaste se touchant à des endroits de croisement et étant interconnectées à ces endroits de croisement au moyen d'un agent liant thermoplastique, un agent thermodurcissable ou d'une colle thermofusible, la surface des fibres étant revêtue par un revêtement qui comporte un produit de réaction durci à partir d'un polyamine et d'un polyalkylène glycol éthérifié avec des groupes terminaux de la structure $X-CH_2[CH(OR)]_wCH_2-$, dans ladite structure w est un nombre entier de 0 à 1, et lorsque w est 0, X représente un halogène, et lorsque w est 1, X représente un halogène et R représente un hydrogène ou X et OR ensemble représentent -O-.

**16.** Tapis d'évaporation selon la revendication 15, dans lequel les fibres consistent d'un plastique ayant un point de fusion ou un intervalle de fusion comprise dans la plage de 190°C à 270°C, en particulier de polyéthylène téréphtalate ou de polypropylène.

**17.** Tapis d'évaporation selon la revendication 15 ou la revendication 16, dans lequel le revêtement comprend un ignifuge.

**18.** Tapis d'évaporation selon la revendication 17, dans lequel l'ignifuge est un ester d'acide phosphonique de la structure suivante:

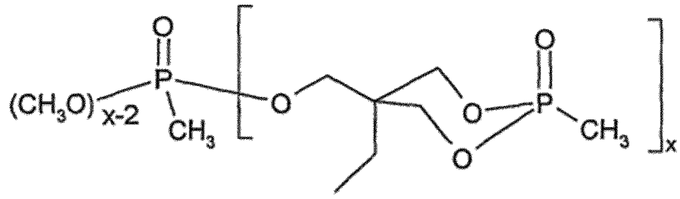

dans laquelle structure x représente 0 ou 1.

**19.** Tapis d'évaporation selon l'une des revendications 15 à 18, qui est déformé de manière ondulatoire, les vallées et les crêtes des ondes s'étendant de manière parallèle et rectiligne l'un par rapport à l'autre, les lignes de raies (B, B') de toutes les vallées étant agencées dans un premier plan imaginaire et les lignes de raies (C, C') de toutes les crêtes étant agencées dans un deuxième plan imaginaire et le premier et le deuxième plan étant agencés de manière parallèle l'un par rapport à l'autre.

**20.** Tapis d'évaporation selon la revendication 19, dans lequel la direction de chaque onde change à un endroit du tapis d'évaporation par formation d'un coude, cet endroit étant défini par l'intersection de la ligne de raie (C) de la crête de cette onde avec une ligne rectiligne imaginaire (A) qui coupe les lignes de raie (C, C') de toutes les crêtes des ondes, et la direction de changement étant la même pour toutes les ondes.

**21.** Procédé pour évaporer du liquide, dans lequel un tapis d'évaporation comme défini par la revendication 1 ou 15 est mouillé avec le liquide et le tapis d'évaporation mouillé est submergé par un flux de gaz, dans lequel la pression partiale du liquide à évaporer est plus petite que la pression partiale de ce liquide qui serait présente dans le flux de gaz s'il était en équilibre thermodynamique avec le liquide.

**22.** Procédé selon la revendication 21, dans lequel le liquide est de l'eau et l'évaporation de l'eau sert à l'humification d'un espace gazeux se trouvant dans les alentours du tapis d'évaporation.

**23.** Procédé selon la revendication 22, dans lequel la salle à gaz comporte de l'air.

**24.** Procédé selon la revendication 21, dans lequel le liquide est une solution d'une substance non-volatile dans l'eau, dans un solvant organique ou dans un solvant mélangé de type organique/aqueux, et l'évaporation du liquide sert à concentrer la substance non-volatile dans le liquide.

**25.** Procédé selon la revendication 24, dans lequel la solution aqueuse est une solution saline, une solution sucrée ou un lixiviat de décharge.

**26.** Procédé selon la revendication 21, dans lequel le liquide est de l'eau, un solvant organique ou un solvant mélangé de type organique/aqueux, et l'évaporation sert à refroidir le liquide.

**27.** Procédé selon la revendication 26, dans lequel la solution aqueuse est un liquide de refroidissement d'une tour de refroidissement d'une centrale électrique ou d'un processus chimique.

Fig. 1

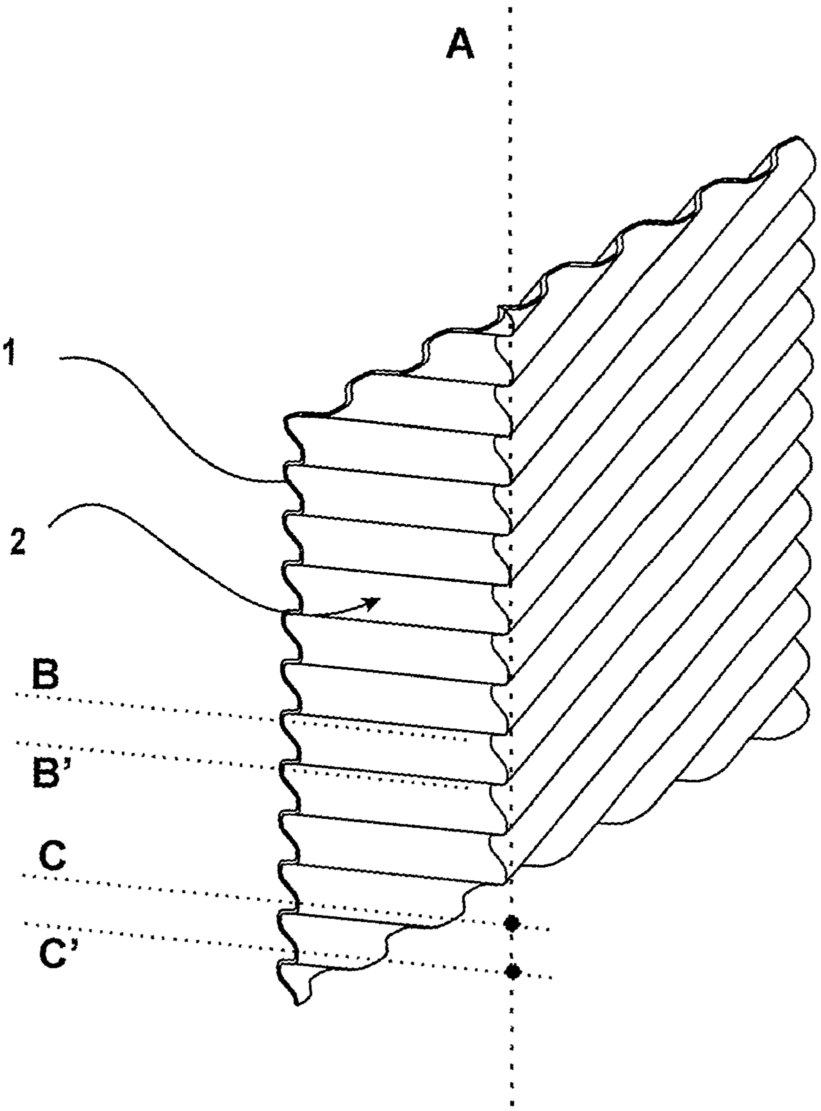

Fig. 2

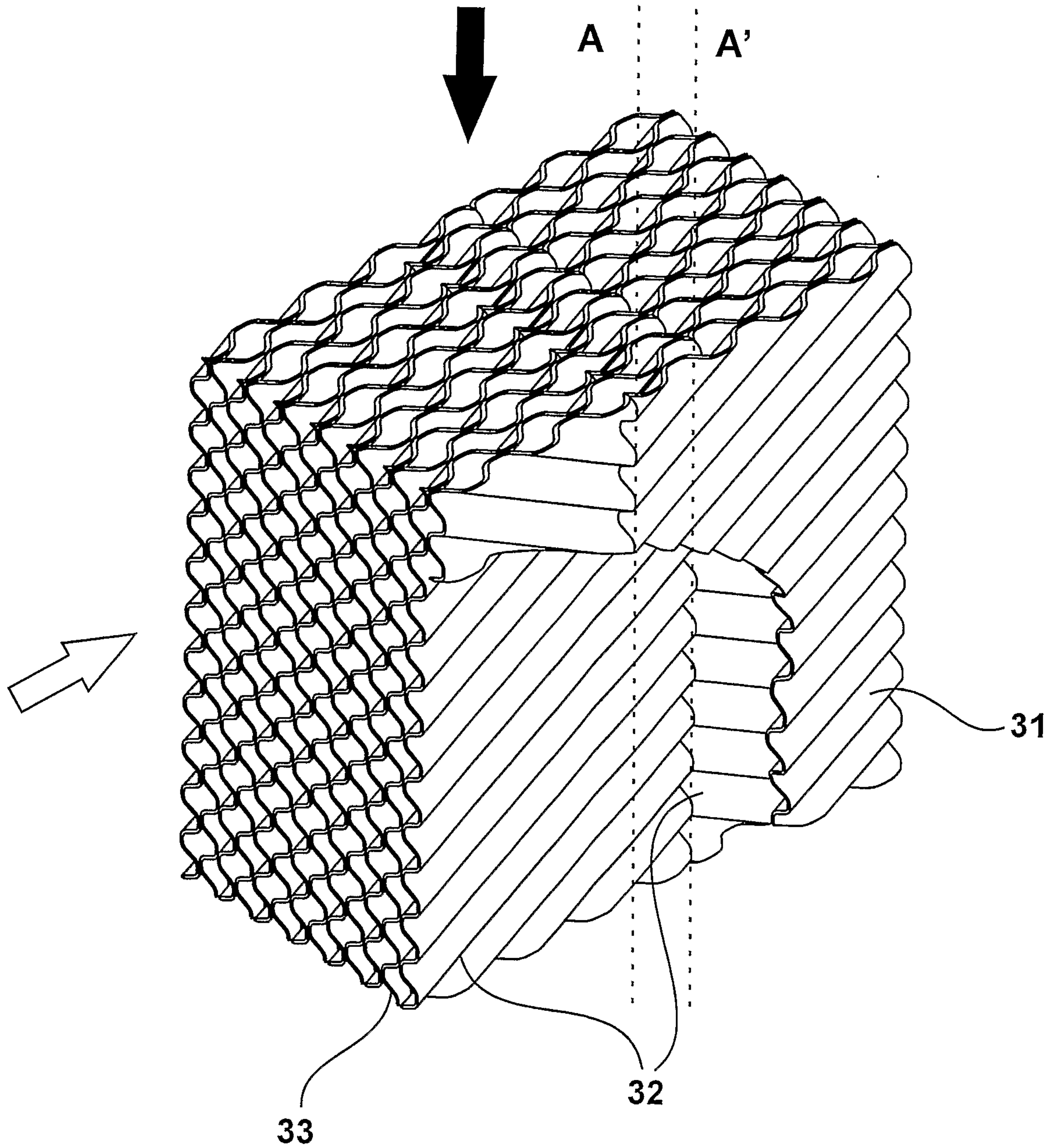

Fig. 3

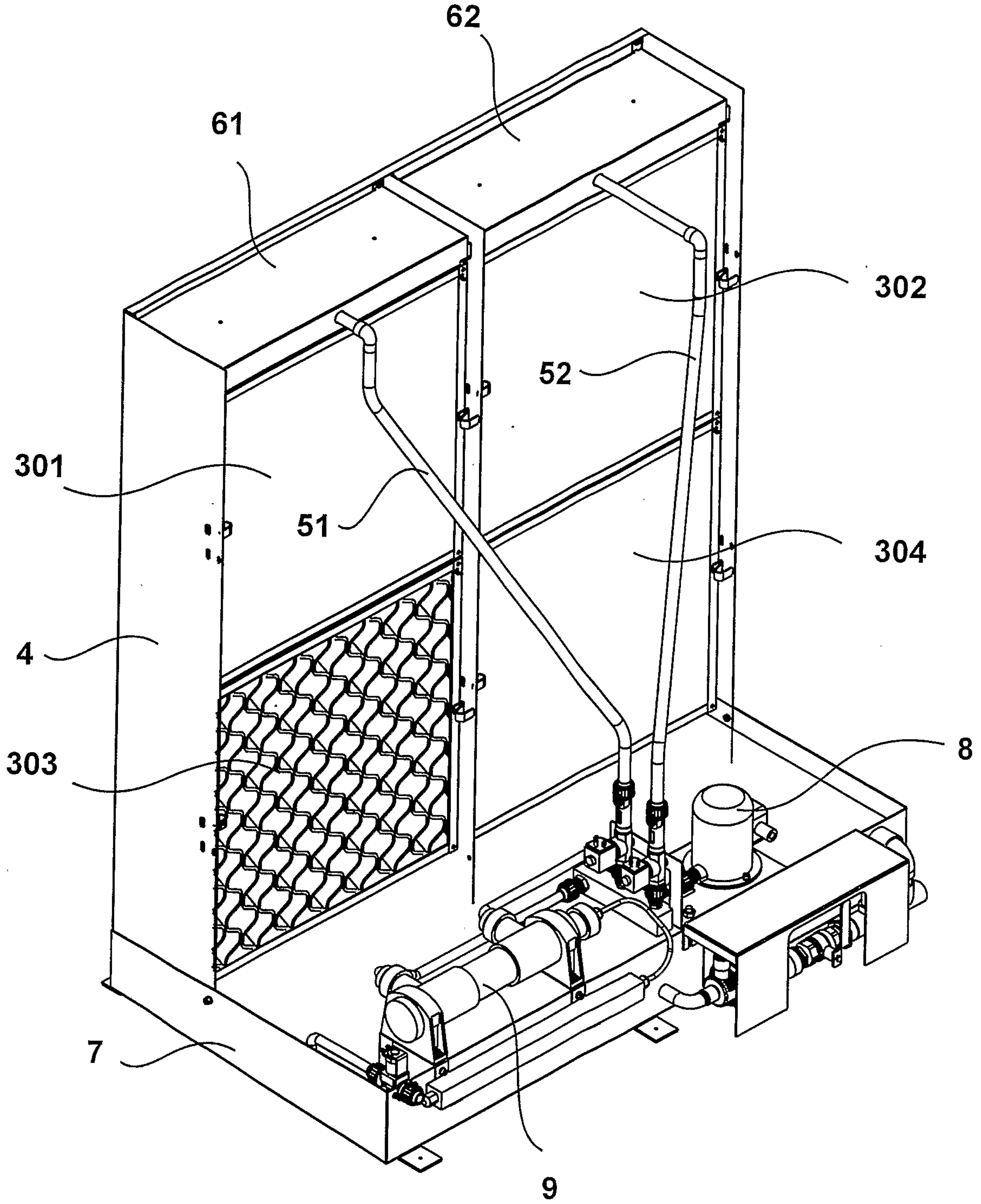

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 9932845 A
- US 5340651 A
- US 3347803 A